# EUROPÄISCHE PATENTSCHRIFT

(11) **EP 0 941 566 B1**
(45) Veröffentlichungstag und Bekanntmachung des Hinweises auf die Patenterteilung: **29.05.2002**
(21) Anmeldenummer: 97955050.6
(22) Anmeldetag: 28.11.1997
(51) Int. Cl.: H02G 9/04

(54) **KABELKANAL UND DECKEL**
CABLE DUCT AND COVER
CANIVEAU DE CABLES ET COUVERCLE CORRESPONDANT

(30) Priorität: 28.11.1996 DE 19651017
(43) Veröffentlichungstag der Anmeldung: 15.09.1999
(73) Patentinhaber: Wirthwein, Udo, 97993 Creglingen (DE)
(72) Erfinder: WIRTHWEIN, Udo, D-97993 Creglingen (DE); KAULBERSCH, Otto, D-97993 Creglingen (DE); MICHEL, Jürgen, D-97283 Riedenheim (DE)
(74) Vertreter: Effert, Bressel und Kollegen
(86) Internationale Anmeldenummer: EP9706634
(87) Internationale Veröffentlichungsnummer: WO9832205

(56) Entgegenhaltungen:
- WO-A-94/21018
- DE-A- 3 447 836
- DE-A- 3 936 003
- DE-U- 9 302 291
- DE-U- 29 501 017
- JP-B- 6 007 726
- PATENT ABSTRACTS OF JAPAN vol. 095, no. 001, 28. Februar 1995 & JP 06 284543 A (FUJI PURECON), 7. Oktober 1994
- PATENT ABSTRACTS OF JAPAN vol. 017, no. 511, 14. September 1993 & JP 05 130726 A (ASABA SEISAKUSHO), 25. Mai 1993

## Beschreibung

Die Erfindung betrifft einen Kabelkanal gemäß dem Oberbegriff des Anspruches 1.

In dem Dokument Patent Abstracts of Japan; Vol. 095; No. 001; abstract date 28/02/95; JP, A, 6-28 45 43 (FUJI PURECON) ist ein Kabelkanal mit folgenden Merkmalen offenbart:
Auf im Erdreich fixierten und zu einander beabstandeten Stützen sind Platten angeordnet, auf denen in zueinander veränderlichen Abstand zwei von Stütze zu Stütze reichende L-förmige Profile mittels Klammern befestigt werden können. Zwischen den im vorbestimmten Abstand montierten L-Profilen ist ein Kabelkanal angeordnet, der mit einem Deckel versehen ist und offensichtlich aus Kunststoff besteht.

Kabelkanäle aus Kunststoff mit etwa U-förmig geformten Wannen, welche mit einem Deckel versehen sind, sind aus der WO 9421018 bekannt. Diese endlos aneinander reihbare und mit Verbindern versehene Wannen werden als etwa 1 m lange Stücke gespritzt, vorwiegend aus recyceltem Kunststoff, wie Polyester, Polyurethan oder Polyethylen. Diese Wannen sind mit speziellen Rippen und Vorsprüngen ausgestattet, die ein Einerden derartiger Kanäle, insbesondere entlang von Bahntrassen zuläßt. Der Deckel ist begehbar; er weist an der Unterseite angeordnete versteifende Rippen auf und ebensolche Deckelränder, mit denen er auf den Rändern der Wanne auflegbar ist.

Aus einem Prospekt der Firma Krupp, DE, "Der Kunststoffkabelkanal DRAE-KA" ist bekannt, derartige Kabelkanäle in Sumpfgebieten aufzuständern. Dargestellt ist ein Holzpfahl mit darauf von Pfahl zu Pfahl sich erstreckenden Bohlen, welche als Stützkonstruktion für den Kabelkanal dienen. Natürlich ist eine derartige Stützkonstruktion witterungsbedingt nur sehr kurzlebig.

Aus der DE 39 36 003 C2 und der DE 34 47 836 A1 sind aufgeständerte Kabelkanäle bekannt, bei denen auf Metallstützen und daran angebrachten Querhalterungen wannenartige Kabelkanalelemente aus Blech verschraubt sind. Sowohl die Stützen, als auch die Querträger und die Wannen, welche allesamt miteinander verschraubt sind, sind in kurzen Abständen durch entsprechende Erdungskabel mit dem parallelen Bahngleis verbunden. Diese Maßnahme ist erforderlich, weil sowohl die Möglichkeit besteht, daß die Kabel in der Wanne schadhaft werden und damit der gesamte Kabelkanal leitend wird, als auch im Falle des Reißens eines Fahrdrahtes einer elektrischen Bahn eine Spannungsverschleppung möglich ist, die verhindert werden muß. Trotzdem lassen die Bahnbetriebe mittlerweile derartige Blechkanäle an elektrifizierten Strecken nicht mehr zu. Zufälligerweise anwesendes Bedienungspersonal könnte durch Stromstöße und entsprechende Leitung der Kanäle gefährdet werden; außerdem können Probleme entstehen für die Signaltechnik, insbesondere für das Gleisfreimeldesystem.

Zwar sind aus der WO 9421018 bekannte Kabelkanäle erfolgreich bei Einerdung eingesetzt worden, jedoch ist deren Einsatzbereich z.B. in Tunneln oder bei zu erwartendem Wasserstau und Ausspülungen sowie Strecken, bei denen Dammrutsche zu erwarten sind, eingeschränkt.

Von daher liegt der Erfindung das Problem zugrunde, verbesserte aufständerbare Kunststoffwannen und dafür geeignete Deckel bzw. für entsprechende Kabelkanäle eine Aufständerung vorzuschlagen, die den zuvor genannten Randbedingungen für derartige Kanäle Rechnung trägt und sowohl auf Erdstützen als auch auf Wandstützen montiert werden kann.

Das Problem wird erfindungsgemäß durch die Merkmale des Anspruches 1 gelöst. Weiterbildende Merkmale sind in den Unteransprüchen erfaßt.

Die Erfindung geht im Prinzip von den in der WO 9421018 dargestellten Kabelkanälen aus und verwendet dazu unter anderem das Vorbild des aufgestelzten Troges gemäß der DE 34 47 836 A1, welche dem Oberbegriff des Anspruchs 1 entspricht. Die Kabelkanäle sind jedoch nur in kurzen Längen auf extrem großen Spritzmaschinen herstellbar, so daß eine einfach Übertragung der für sich bekannten Lösung nicht in Frage kommt, weil ein derart geringer Stützenabstand in den meisten Fällen unwirtschaftlich wäre, zudem müßte mit dem Stützenabstand stets die Trennfuge der Kanäle exakt getroffen werden, um benachbarte Wannen der Kabelkanäle haltem zu können.

Aus diesem Grund wird in einer Variante erfindungsgemäß zunächst die Stütze mit einem sich in Längsrichtung des Kabelkanales erstreckenden Träger versehen, auf den dann die Wannen gestülpt werden, ohne daß diese nochmal separat an den Trägern befestigt werden müssen.
Zu diesem Zwecke sind die Wannen erfindungsgemäß mit Rücksprüngen versehen, die genau so ausgestaltet sind, daß sie die Träger aufnehmen können, sobald die Wanne über die Träger gestülpt wird.
Idealerweise sind die Rücksprünge so gestaltet, daß die Wannen nach Aufstülpen die Träger oder Teile des Trägers nach Art eines Klemm- oder Schnappverschlusses umgreifen oder reibschlüssig halten. Eine geringfügige Längsverschieblichkeit auf den Trägern ist dabei durchaus erwünscht, um die Wannen ohne größere Fugen aneinanderreihen zu können. Die dazu verwendbaren Wannenverbinder sind in der WO 9421018 dargestellt, können jedoch bei der Erfindung entfallen.
Anstelle derartiger Klemm- oder Schnappverschlüsse direkt an den Rücksprüngen können auch Teile der Wanne, vorzugsweise an ihren Seiten oder unter ihrem Boden so gestaltet sein, daß diese den Träger umgreifen oder reibschlüssig erfassen.
Für einen effektiven Übergang von Wanne zu Wanne und um auch eine noch so geringe Torsion der Wannen gegeneinander zu begrenzen, können die Wannenenden mit Zungen versehen sein, die jeweils Teil der Innenwandung der folgenden Wanne werden können.
Alternativ oder additiv sind die Wannen durch Schrauben, z.B. selbstschneidende Metallschrauben mit den Trägern verbunden. Derartige Schrauben können nach Überstülpen und Positionieren der Wannen durch die Wannenränder von oben in die Träger gebohrt werden, wobei in die Wannenränder hilfsweise entsprechende Führungen eingespritzt sein können.

Um der Gefahr der Störung von Gleisfreimeldesystemen zu entgehen oder auch einen ungewollten Kurzschluß mit einem herabfallenden Fahrdraht zu vermeiden, sind die Rückssprünge erfindungsgemäß so gestaltet, daß der Träger im wesentlichen in der Form der Wanne verschwindet. Mit anderen Worten sind die Rücksprünge außenseitig so geformt, daß die Träger bei montierter Wanne innerhalb der, von den Wannenaußenseiten definierten, Umhüllenden der Wanne liegt, d.h. die Wanne zugleich eine integrale mit der Wanne einstückig verbundene Schürze hat. So kann kein stromführendes Teil an die Träger gelangen. Dies gilt gleichermaßen für die eventuell innerhalb der Wanne liegenden beschädigten Kabel.
In manchen Fällen, kann es sinnvoll sein, zunächst einfacher gestaltete und somit preiswerter spritzbare Kunststoffwannen herzustellen und zu montieren und nur bei Bedarf, wenn keine andere Erdung möglich ist, Mittel zur Abdeckung der Träger nachträglich anzubringen. Dies sind z.B. Schürzen aus Isolierstoffen, die so an der Wanne, dem Träger oder einer Stütze durch beispielsweise Kleben oder Schrauben anbringbar sind, daß die Träger verdeckt werden.
Die Träger sind in der Regel aus Metallprofilen gebildet, vorzugsweise aus Stahlprofilen. In einer bevorzugten Ausführungsform handelt es sich hier um Rechteckrohre oder Rundrohre, welche aus Korrosionsschutzgründen oder für einen besseren Reibschluß mit der Wanne noch zusätzlich mit Kunststoff beschichtet sein können. Allerdings sind auch T-Profile oder L-Profile oder U-Profile in entsprechender Ausbildung und Anordnung prinzipiell verwendbar, wenn ihnen auch Nachteile bezüglich Maßhaltigkeit, Torsion und/oder Oberflächenschutz - herstellungsbedingt - anhaften können.

Mit derartigen Metallprofilen können leicht Traglasten von 100 kg pro Meter oder mehr, wie sie bahnüblich für Kabelkanäle gefordert werden, aufzufangen.

Idealerweise ruht jede Wanne auf zwei zueinander parallelen Trägern, die in horizontalem Abstand im unteren Teil der Wanne angeordnet sind, wenn die Wanne in ihrer Gebrauchslage ist.

Es ist für schmalere Wannenquerschnitte jedoch auch möglich, mit einem einzigen Profil in einem entsprechenden Rücksprung des Wannenbodens oder des die Wanne versteifenden, Rippensystems, z.B. den sich quer zur Wanne erstreckenden Versteifungsrippen, alle Lasten aufzunehmen. Insbesondere bei geteilten Wannen bietet sich ein derartiges Trägersystem an.

In der bevorzugten Ausführungsform besteht die einfachste Art der Verbindung darin, die Stützen in einem Abstand von 6, 8 oder 10 m mit derartigen Trägern zu verbinden, so daß eine horizontale Endlosstütze entsteht. Diese Träger werden aus Gründen der elektrischen Isolierung und der Korrosion und auch zur leichten Montierbarkeit mit Formstücken aus Kunststoff an den Stützen verschraubt. Diese Formstücke sollen trägerseitig so ausgebildet sein, daß sie die Stütze wenigstens teilweise umgreifen. Eine Verschraubung der Träger auf den Formstützen kann von der Unterseite her erfolgen, montagetechnisch einfacher ist es jedoch, z.B. ein Rechteckrohr in Gebrauchslage von der Seite her mit entsprechenden Flanschen der Formstücke durch Schrauben zu verbinden.
Die Stützen selbst bestehen beispielsweise aus Stahlträgern oder ähnlichen Profilen, die vertikal ins Erdreich ragen oder als Stützen zunächst vertikal und/oder horizontal in ein benachbartes Mauerwerk, z.B. in eine Tunnelwand ragen und dort befestigt sind.

In der Regel werden diese Kabelkanäle wie für sich bekannt mit Deckeln versehen, die teils aufgrund ihrer Steifigkeit und Trittsicherheit auch begehbar sind. Die Deckel sollen mit den Wannen verriegelbar sein. Dazu wird in Weiterbildung der Erfindung der Wannenrand an einer oder beiden Seiten der Wanne mit Durchbrüchen und / oder Höckern versehen, die einen Formschluß, z.B. eine Verhakung, insbesondere mit Deckeln ermöglichen, die komplementäre Vorrichtungen und Rippen bzw. steife Ränder an der Deckelunterseite haben. Schlösser können additiv für befugtes Öffnen der Deckel vorgesehen werden.
Ein Problem ergibt sich dabei insbesondere bei auf den Trägern fixierten Wannen. Durch Erwärmung, z.B. Sonneneinstrahlung kann der Deckel sich stärker ausdehnen als die Wannen und diese stärker als die Träger. Die Längsdehnung der Deckel kann dadurch kompensiert werden, daß ein überlappendes Ausdehnen konstruktiv von vornherein vorgesehen wird. In Ergänzung können die Deckel im Vorhinein länger als die Wannen gestaltet sein, so daß man synergistisch sowohl einen durch Herstell- oder Montagetoleranzen entstehenden Spalt an den Deckelenden und die Wärmedehnung berücksichtigt. Andererseits soll der Deckel seine Steifigkeit behalten. Aus diesem Grunde wird nicht einfach eine dünne Überlappungslippe gewählt, sondern der Deckel in seinem Grundaufbau mit den Versteifungen an der Unterseite beibehalten, aber seine Dicke mehr als halbiert und ein versteifter Rand vorgesehen, der über den Nachbardeckel greift. Dazu ist jedoch additiv eine Längsverschieblichkeit auch der Formschlußelemente zwischen Deckel und Wanne erforderlich. Bei Schamierverbindungen wird dies gelöst, indem die Verbindung Bolzen-Bolzenauge längsbeweglich gestaltet, z.B. der Bolzen länger gestaltet wird als seine Halterung. Weitere Haken beispielsweise zur Abhebesicherung des Deckels können in Langlöcher des Wannenrandes eingreifen. Es besteht auch die Möglichkeit, auf den Wannenrändern Höcker anzubringen, die mit den Rippen oder Rändern des Deckels in Wirkverbindung stehen, in dem sie als Festpunkt für eine gezielte Dehnung des Deckels oder als Führung für ein einwandfreies Schließen des Deckels oder Schlosses zugleich benutzt werden.

Anhand von Ausführungsbeispielen soll die Erfindung in einer Zeichnung näher erläutert werden. Es zeigen:
- Figur 1a: einen Teilschnitt durch eine etwa U-förmige Kunststoffwanne im Kontakt mit den Trägem und eine Trägerbefestigung;
- Figur 1 b: Stützanordnung für einen Kabelkanal gemäß Fig. 1 a;
- Figur 2 a, b: zwei weitere Ausführungsformen der Erfindung unter Verwendung von Trägern aus Rundrohr bzw. Doppel-T-Profilen;
- Figur 3 a, b: andere Ausführungsformen der Erfindung mit die Wanne seitlich abstützenden L-förmigen bzw. H-förmigen Trägern;
- Figur 4: eine alternative Ausführungsform der Erfindung mit einem Träger aus Flachstahl mit aufgeschweißtem Bügeln;
- Figur 5: eine siebte Ausführungsform mit einem Träger aus Rechteckrohr;
- Figur 6: eine achte Ausführungsform mit einem U-förmigen Träger;
- Figur 7a,b: eine weitere Ausführungsform der Wanne in Draufsicht und im Schnitt in montierter Gebrauchslage;
- Figur 8a-d: einen Deckel in Draufsicht (a), Unteransicht (b), im Längsschnitt (c) und Querschnitt (d) gemäß Fig. 8a;
- Figur 9: benachbarte Deckel ausschnittweise in Überlapptposition.

Im folgenden sind identische oder ähnlich wirkende Teile teils mit denselben Bezugsziffern versehen.

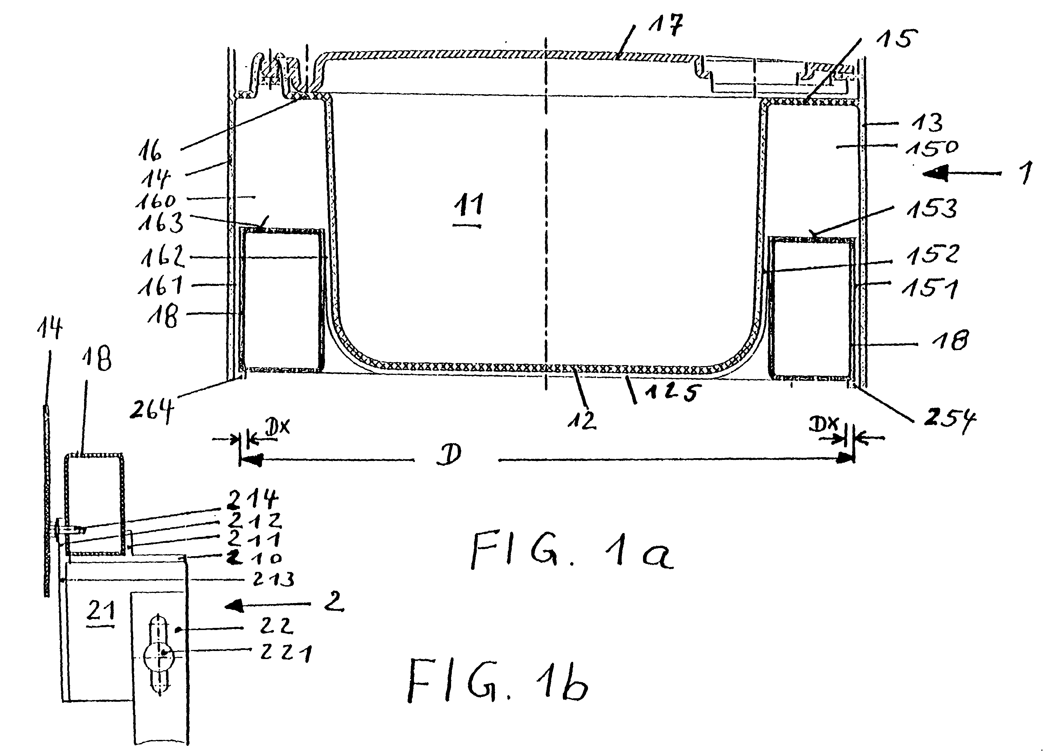

Fig. 1 a zeigt einen Querschnitt durch einen erfindungsgemäßen Kabelkanal 1. Ein Kanalelement mit Wanne 11 aus Polyethylen zur Aufnahme von Kabeln ist zwischen der Innenwand 12 jeweils zu den Außenwänden 13 bzw. 14 hin und begrenzt durch die Auflagen 15, 16 des Wannenrandes für den Deckel 17, durch Rippen 150 bzw. 160 versteift. Diese Querrippen können je nach Länge der Wanne 11 in regelmäßigen Abständen längs der Wanne angeordnet sein. Die Ausläufer 152, 162 der Rippen enden in der Bodenversteifung 125.
Entlang der die gesamte Wanne 11 außen abschließenden Wände 13, 14 verlaufen von der Unterkante 153, 163 der Rippen 150, 160 die Rippenteile 151 bzw. 161, in vertikaler Richtung und enden in Vorsprüngen 254 bzw. 264. Zwei rechteckige Stahlrohre 18 ruhen - in nicht dargestellter Weise - auf einer Vertikalstütze oberhalb des Bodens. Die Rohre sind so positioniert, daß ihre Außenwände die Distanz D haben.
Nach Vormontage der Rohre 18 auf der Stütze kann die komplette Wanne 11 über die Rohre 18 gestülpt werden, so daß diese in den durch Kanten 151, 152, 153 bzw. 161, 162, 163 der Rippen 150 bzw. 160 gebildeten Rücksprünge eingreifen. Mit geringen Anpressdruck rasten die Rohre 18 nach elastischem Rückbiegen der Vorsprünge 254 bzw. 264 um das Vorspannmaß DX in den Rücksprüngen ein und halten die Wanne 11 in Gebrauchslage, so wie in Fig. 1 a dargestellt. Der Deckel 17 kann, wie für sich aus der WO9421018 bekannt, später eingesetzt werden, wenn die Kabel in der Wanne liegen.
Das Distanzmaß zwischen den Rippen 151 - 161 kann etwas kleiner als das Maß D gestaltet sein, so daß die Wanne 11 auf den Rohren 18 klemmend gehalten wird. In diesem Fall könnte auf die elastischen Rücksprünge 254, 264 verzichtet werden. Zur Verbesserung des Reibschlusses zur Wanne können die Rohre mit einer dünnen Kunststoffschicht überzogen sein. Diese verhindert während der Lagerzeit oder Montagezeit auch eine Korrosion der Rohre.

Die Rohre 18 werden im Abstand von z.B. 6 m auf Stützen gelagert, so daß sich ein endloses Trägerpaar aus Rohren 18 ergibt, auf dem kurze Wannen von z.B. 1 m Länge arretiert werden können.

Die Träger werden gemäß Fig. 1 b so in das Querschnittsprofil der Wanne eingebunden, daß sie nicht überstehen. Dadurch können keine Kontakte mit herabfallenden Oberleitungen entstehen.

Fig. 1 b zeigt eine mögliche Befestigung der Rohre 18 aus einem Ständerwerk 2 für einen Kabelkanal 1 gemäß Fig. 1 a.
Zwischen den nicht dargestellten Rippen 160 ruht Rohr 18 auf Stützen 22 aus T-Profil. Ein Formstück 21 aus Kunststoff mit Basis 210 und Kopfflansch 213 ist mittels Schrauben 221 auf dem T-Profil befestigt und isoliert das Rohr 18 von dem T-Profil. Das Rohr 18 ist zwischen die Flansche 211, 212 des Formstückes 21 eingefügt und dort durch z.B. Blechschrauben 214, welche den Flansch 212 und die Wand des Rohres durchgreifen, fixiert.
Nunmehr kann die Wanne 11, hier als Außenwand 14 dargestellt, über das Rohr gestülpt werden.
Die Montage dieses Kabelkanales 1 wird durch die angegebene Arbeitsfolge sehr vereinfacht.

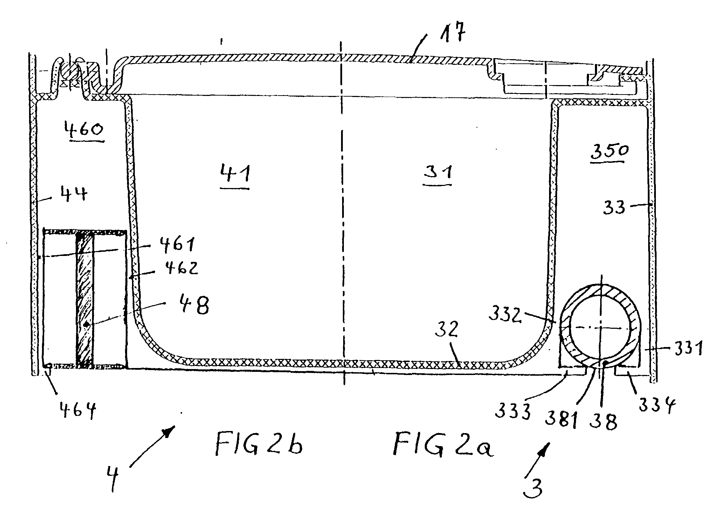

Fig. 2 a, b zeigen alternative Kabelkanäle 3 bzw. 4 mit Wanne 31 bzw. 41 entsprechend Fig. 1 a.
In Fig. 2 a ist jedoch die Rippe 350 zwischen der Innenwand 32 und der Außenwand 33 im unteren Bereich mit den Teilen 331 und 332 so gestaltet, daß ein Rundrohr 38 mit Beschichtung 381 als Träger aufgenommen werden kann. In dem so gebildeten Rücksprung wird der Träger hinter den elastischen Nasen 333, 334 nach Art eines Schnappverschlusses gehalten.

Fig. 2 b zeigt den Kabelkanal 4 mit Wanne 41 und Außenwand 44 -. Der Träger ist als Doppel-T-Träger 48 ausgebildet und wird von den vertikalen Fortsätzen - 461, 462 der Rippe 460 gehalten. Die Klinke 464 umgreift den unteren Flansch des Trägerprofiles und hält so die Wanne in Gebrauchslage.
Die Wannen 31, 41 können wie gemäß Fig. 1 a beschrieben über den Träger gestülpt werden.

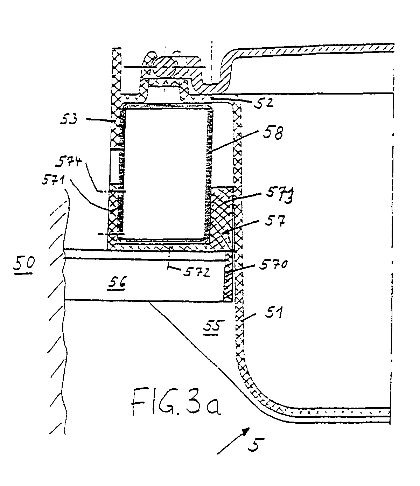

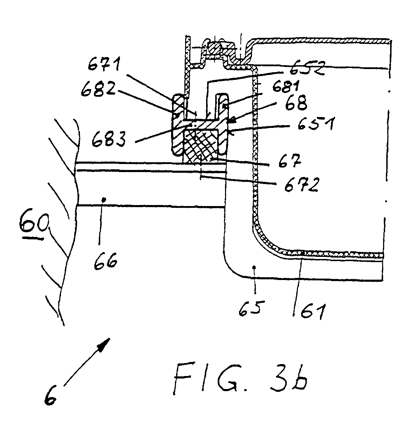

In den Figuren 3 bis 6 sind geringfügig andere Wannenformen dargestellt, die aber nach demselben Erfindungsprinzip gehalten werden.

Fig. 3 a mit Kabelkanal 5 zeigt eine Ausführungsform, bei der eine Stütze 56 horizontal aus einer Tunnelwand 50 ragt.
Auf die als T-Profil mit horizontalem oberen Flansch ausgebildeten Stütze 56 ist ein Kunststoff-Formstück 57 aufgesetzt. Beide Teile sind durch Schrauben 572 miteinander verbunden. Flansche 571, 573 der Wanne umschließen ein als horizontaler Träger 58 ausgebildetes Rechteckrohr und arretieren dieses durch Schrauben 574.
Die Wanne stützt sich mit ihrer Außenseite der Innenwand 51 an den Flansch 570, 573 des Formstückes ab und ruht andererseits mit der Deckelauflage 52 und der Außenwand 53 auf dem Rechteckrohr. Das Rechteckrohr ist hier maximal so lang wie der Abstand zweier Rippen 55 des Kabelkanals 5.

Fig. 3 b zeigt den Kabelkanal 6 in ähnlicher Ausführung wie der Kanal 5, abgestützt auf einem T-Profil 66 in Tunnelwand 60.
Auf dem Profil ist ein Formstück 67 aus PVC mittels Schraube 672 befestigt; dieses trägt ein H-Profil 68, verschraubt mittels Verbinder 671. Das Profil 68 kann wiederum mit Kunststoff ummantelt sein.
Der Flansch 681 und der Steg 683 des Profiles 68 halten die Wanne 61 an den komplementär geformten Rippenteilen 652, 651. In diesem Fall kann natürlich auch ein H-Profil verwendet werden, bei dem der Flansch 682 ebenfalls mit seinem Querschnitt innerhalb der Breite der Rippe 65 liegt.
Anstelle der hier durchbrochenen oder teilweise abgearbeiteten Rippe 65 kann diese auch in gleicher Weise als Vollrippe wie in Fig. 3a ausgebildet sein.
In diesem Fall läuft der Flansch 682 des H-Profiles 68 von Stütze 66 zu der nächsten z.B. 4 m entfernten Stütze 66 durch, während die Flanschteile 681 jeweils im Bereich der Rippe 65 ausgeklinkt sind.

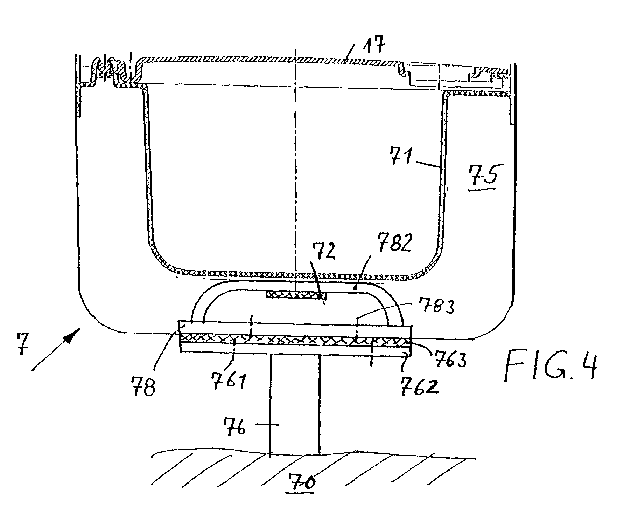

Fig. 4 zeigt einen Kabelkanal 7 mit unterem Wannenteil, der auf einer in Erdreich 70 verankerten Stütze 76 mit Tellerflansch 761 ruht. Eine isolierendes Formstück 763 trennt den Träger 78, der innerhalb der Wanne bzw. deren Rippe 75 liegt, von der Stütze. Der Träger 78 hat in Abständen bügelartige Flanschstücke 782, die vor jeder Rippe 75 in von der Innenwand 71 der Wanne rückspringenden Zapfen 72 eingreifen und so die Wanne haltern. Schrauben 761 und 783 halten den Ständer zusammen.

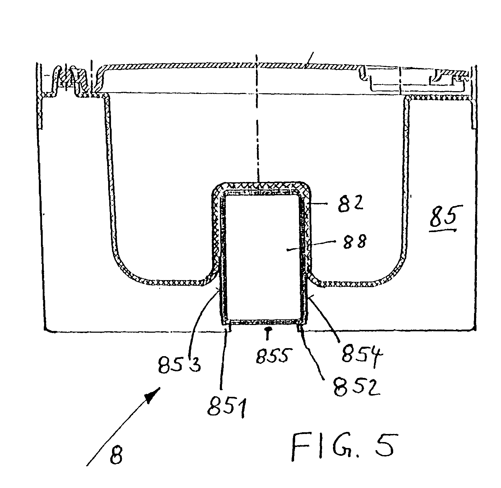

Fig. 5 zeigt einen Kabelkanal 8 analog Fig. 4. Der Boden 82 der Wanne ist im Mittelteil hochgezogen, so daß sich eine Wanne mit Mittelsteg ergibt. Die Versteifungs-Querrippe 85 ist im Mittelteil 855 unterbrochen. Dadurch ergibt sich ein Rücksprung in der Rippe, in den zwischen den Kanten der 853, 854 der Rippe 85 und dem Boden 82 ein Profil 88 Platz findet. Die Wanne wird durch die Kunststoff-Nasen 851, 852 auf dem Profil 88 gehalten.

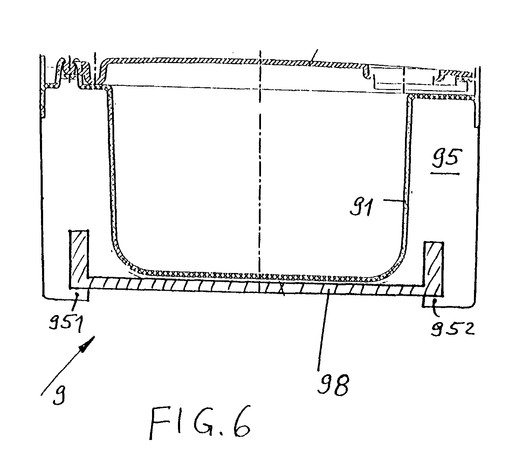

Fig. 6 zeigt schließlich ein von einer nicht dargestellten Stütze gehaltenes U-Eisen 98 als Träger für einen Kabelkanal 9. Die Versteifungsrippen 95 für den Wannenboden 91 weist eine zu dem U-Eisen 98 komplementäre Aussparung auf, damit die Wanne über den Träger gestülpt werden kann und durch Einrasten hinter den elastischen Nasen 951, 952 gehalten wird.

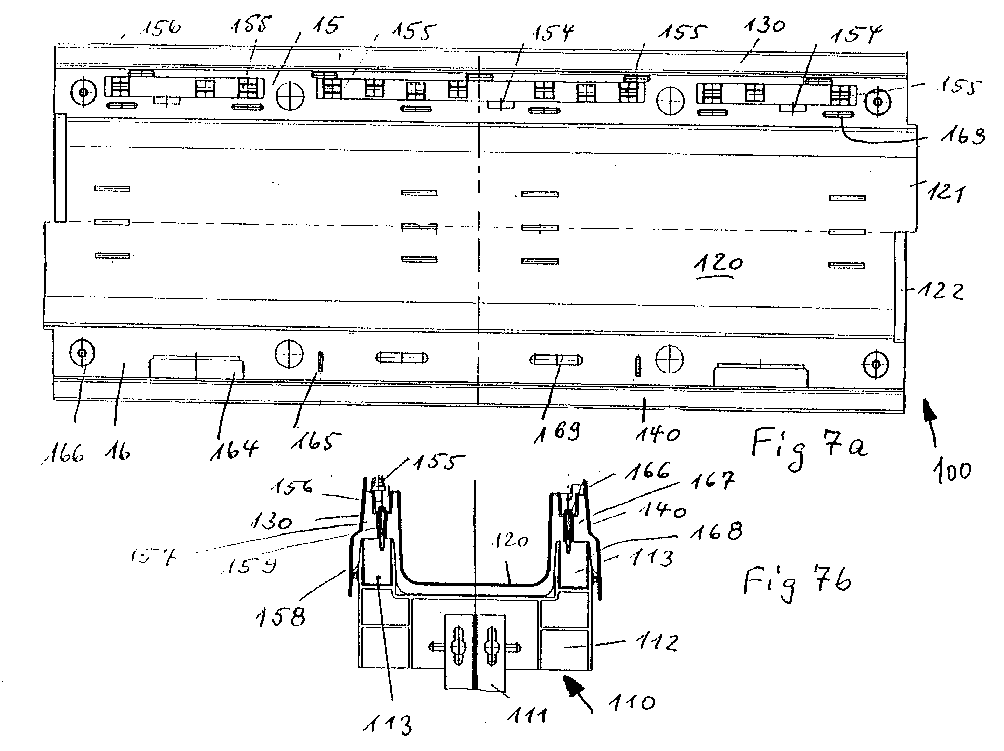

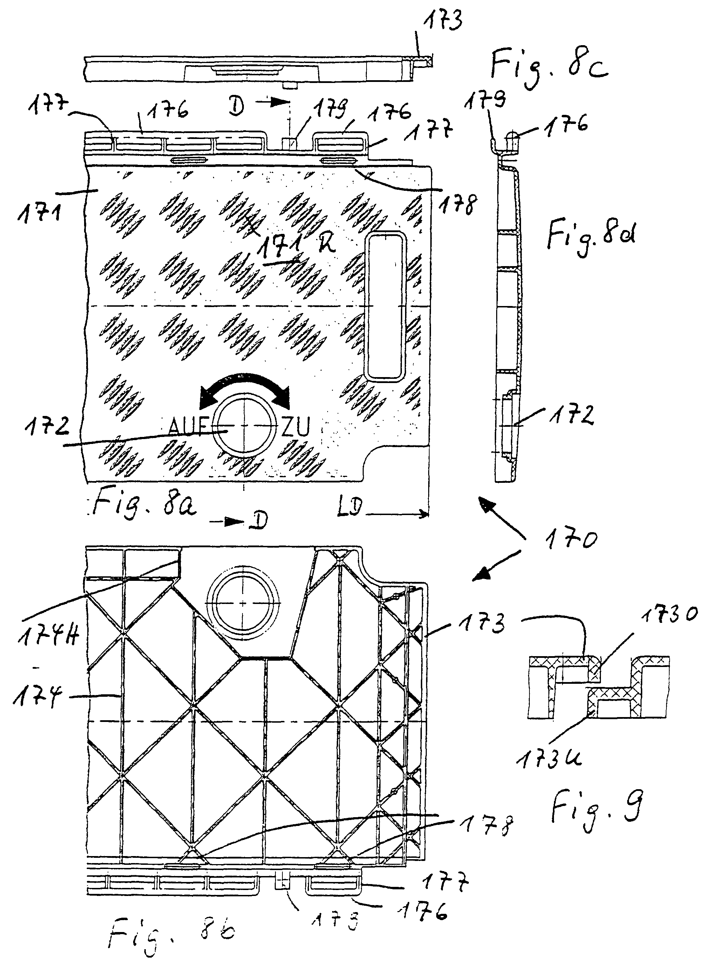

Fig. 7a zeigt eine Wanne ohne Deckel in Draufsicht mit den Wannenrändern 15 und 16 sowie den zugehörigen Außenwänden 130 links und 140 rechts, die zur Baubreitenersparnis im Bereich der Rücksprünge 168 und 158 (Fig. 7b) in den Rippen 157, 167 der Wanne 100 oberhalb der Träger 113 nach außen verspringen. Die Wanne kann mit Schrauben 159, eingesetzt in Führungskanäle 156, 166 durch die Wannenränder von oben hindurch mit den Trägern 113 verschraubt werden. Die Träger werden von einem Doppelhalter 112 gehalten, der seinerseits an der Stütze 111 der Stützeinrichtung 110 verschraubt ist.
Der Wannenboden 120 endet wechselweise je Wannenhälfte in einer Lippe 121 und dazu passender Vertiefung 122, so daß eine relativ dichte Überlapptverbindung der Innenwandung der Wanne mit einer nicht dargestellten Nachbarwanne möglich ist.
Auf den Wannenrändern 15,16 sind Abläufe 169 als Durchbrüche angeordnet, damit Wasser ablaufen kann. Die Verriegelungselemente mit einem in Fig. 8a-d dargestellten passenden Deckel umfassen auf dem rechten Wannenrand Fallen 164 für ein Schloß 172 im Deckel 170 sowie zwei Höcker 165 für die Führung bzw. Längsverschiebesperre des Deckels in Wirkverbindung mit der dortigen Höckerrippe 174 H. Auf den linken Wannenrand 15 sind drei Systeme von Bolzenaugen 155 für drei komplementäre Bolzen 176 des Deckels angeordnet. Die Gesamtlänge der als teils offener Umgriff ausgebildeten Bolzenaugen oder besser Bolzenhalter ist um etwa 5 - 20 Millimeter, im konkreten Fall um 12 mm kürzer als der jeweilige Bolzen 176, so daß maximal um dieses Maß der Deckel 170 längsverschieblich ist und eine Überlapptposition gemäß Fig. 9 variieren kann. Die Durchbrüche 154 dienen dem Eingriff eines von der Unterseite des Deckels von einer dortigen Rippe hervorspringenden Hakens 179 als Eingriff zur Abhebesicherung des Deckels nach Positionierung auf der Wanne.
Fig 8a zeigt den Deckel 170 mit seiner Oberfläche 171, zur Rutschsicherung versehen mit Riffeln 171 R, abschnittsweise. Fig. 8c zeigt den zuhörigen Längsschnitt und Fig. 8d den Querschnitt des Deckels gemäß Schnitt D-D in Fig. 8a. Bolzen 176, am Deckel mit Stegen 177 gehalten dient der Scharnierfunktion des Deckels 170 zur Wanne 100 in Kooperation mit den zuvor beschriebenen Bolzenhaltern. Der Haken 179 greift bei geschlossenem Deckel in den Durchbruch 154 des Wannenrandes 15. In dieser Position kann das Schloß 172 die markierten Stellungen AUF-ZU einnehmen und in der ZUStellung an der Falle 164 der Wanne veriegelt werden. Die Deckelränder 173, an ihren längsgerichteten Enden 173 O bzw. 173 U teilweise verstärkt (Fig.9), dienen ebenfalls zur Versteifung des Deckels der schon zahlreiche versteifende Rippen 174 gemäß Fig. 8b aufweist. Die Abläufe 178 dienen der Wasserabfuhr von der Oberfläche. Der Deckel ist gemäß Fig.9 um das Maß LD (Fig. 8a) länger als die zugehörige Wanne, im konkreten Falle um 5 mm.

### Bezugszeichenliste

- 1: Kabelkanal
- 2: Ständerwerk
- 3: alternativer Kabelkanal
- 4: alternativer Kabelkanal
- 5: Kabelkanal
- 6: Kabelkanal
- 7: Kabelkanal
- 8: Kabelkanal
- 9: Kabelkanal
- 11: Wanne
- 12: Innenwand
- 13: Außenwand
- 14: Außenwand
- 15: Wannenrand-Auflage
- 16: Wannenrand-Auflage
- 17: Deckel
- 18: Rohr
- 21: Formstück
- 22: Stütze
- 31: Wanne
- 32: Innenwand
- 33: Außenwand
- 38: Rundrohr
- 41: Wanne
- 44: Außenwand
- 48: Doppel-T-Träger
- 50: Tunnelwand
- 51: Innenwand
- 52: Deckelauflage
- 53: Außenwand
- 55: Rippe
- 56: Stütze
- 57: Kunststoff-Formstück
- 58: Träger
- 60: Tunnelwand
- 61: Wanne
- 65: Rippe
- 66: Stütze
- 67: Formstück
- 68: Profil
- 70: Erdreich
- 71: Innenwand
- 72: Zapfen
- 75: Rippe
- 76: Stütze
- 78: Träger
- 82: Boden
- 85: Rippe
- 88: Profil
- 91: Wannenboden
- 95: Versteifungsrippe
- 98: U-Eisen
- 100: Wanne
- 110: Stützkonstruktion
- 111: Pfahl
- 112: Doppelhalter
- 113: Träger
- 120: Boden
- 121: Lippe
- 122: Vertiefung
- 125: Bodenversteifung
- 130: Außenwand links
- 140: Außenwand rechts
- 150: Rippe
- 151: Rippenteil
- 152: Ausläufer
- 153: Unterkante
- 154: Durchbruch
- 155: Bolzenauge
- 156: Schraubenführung
- 157: Rippe
- 158: Rücksprung
- 159: Schraube
- 160: Rippe
- 161: Rippenteil
- 162: Ausläufer
- 163: Unterkante
- 164: Falle
- 165: Höcker
- 166: Schraubenführung
- 167: Rippe
- 168: Rücksprung
- 169: Ablauf
- 170: Deckel
- 171: Oberfläche
- 171: R Riffel
- 172: Schloß
- 173: versteifender Rand
- 173: O oberer Rand
- 173: U unterer Rand
- 174: Versteifungsrippe
- 174: H Höckerrippe
- 176: Bolzen
- 177: Steg
- 178: Abfluß
- 179: Haken
- 210: Basis
- 211: Flansche
- 212: Flansche
- 213: Kopfflansch
- 214: Blechschrauben
- 221: Schrauben
- 254: Rücksprung
- 264: Rücksprung
- 331: Teil
- 332: Teil
- 333: elastische Nase
- 334: elastische Nase
- 350: Rippe
- 381: Beschichtung
- 460: Rippe
- 461: vertikaler Fortsatz
- 462: vertikaler Fortsatz
- 464: Klinke
- 570: Flansch
- 571: Flansch
- 572: Schraube
- 573: Flansch
- 574: Schraube
- 651: Rippenteil
- 652: Rippenteil
- 671: Verbinder
- 672: Schraube
- 681: Flansch
- 682: Flansch
- 683: Steg
- 761: Schraube
- 762: Tellerflansch
- 763: Formstück
- 782: Flanschstück
- 783: Schraube
- 851: Kunststoff-Nase
- 852: Kunststoff-Nase
- 853: Kante
- 854: Kante
- 855: Mittelteil
- 951: elastische Nase
- 952: elastische Nase
- LD: Länge Deckel

## Patentansprüche

1. Kabelkanal bestehend aus aneinander reihbaren, mit Deckel (17, 170) verschließbaren Wannen (11, 31, 41, 51, 61, 71, 82, 91 100) aus Kunststoff, welche zum Montieren auf in Längsrichtung des Kabelkanals sich erstreckende, mit einer Stützkonstruktion verbindbare Träger geeignet sind, **dadurch gekennzeichnet, daß** die Wannen (11, 31, 41, 51, 61, 71, 82, 91, 100) außenseitig Rücksprünge aufweisen, welche über die in Längsrichtung des Kabelkanals sich erstreckenden Träger (18, 38, 48, 58, 68, 78. 88, 98) stülpbar sind.

2. Kabelkanal nach Anspruch 1, **dadurch gekennzeichnet, daß** die Rücksprünge so tief sind, daß der Träger bei montierter Wanne innerhalb der Umhüllenden der Wanne liegt.

3. Kabelkanal nach Anspruch 1 oder 2, **dadurch gekennzeichnet, daß** jede Wanne (7, 8, 9) mittig im Boden oder unter dem Boden (82, 91) in einer Querrippe (75, 85, 95) mindestens einen Rücksprung (72, 855) aufweist.

4. Kabelkanal nach einem der vorhergehenden Ansprüche, **dadurch gekennzeichnet, daß** die Träger auf vertikalen Stützen montierbar sind.

5. Kabelkanal nach einem der vorhergehenden Ansprüche, **dadurch gekennzeichnet, daß** er Mittel zur wenigstens teilweisen Abdeckung der Träger aufweist.

6. Kabelkanal nach Anspruch 5, **dadurch gekennzeichnet, daß** die Mittel einstückig an die Wanne angeformte oder separat an die Wanne, die Träger oder die Stützen anbringbare Schürzen umfassen.

7. Kabelkanal nach einem der vorhergehenden Ansprüche, **dadurch gekennzeichnet, daß** die Wanne mit Teilen derselben auf dem Träger nach Art eines Klemm- oder Schnappverschlusses haltbar ist.

8. Kabelkanal nach einem der vorhergehenden Ansprüche, **dadurch gekennzeichnet, daß** die aneinander reihbaren Wannen mit einer im Querschnitt U-förmigen Innenwandung jeweils Vorsprünge (121) haben, die nach Aneinanderreihung einen überlappten Teil der Innenwandung der benachbarten Wanne, die dort eine Aussparung (122) hat, bilden.

9. Kabelkanal nach einem der vorhergehenden Ansprüche, **dadurch gekennzeichnet, daß** die Wannen mittels Schrauben mit dem Träger verbindbar sind, wobei die Schrauben vorzugsweise einen Wannenrand von oben durchgreifen.

10. Kabelkanal nach Anspruch 9, **dadurch gekennzeichnet, daß** die Schrauben für Metall selbstschneidend ausgebildet sind.

11. Kabelkanal nach einem der vorhergehenden Ansprüche, **dadurch gekennzeichnet, daß** jede Wanne auf zwei zueinander parallelen Trägem montierbar ist.

12. Kabelkanal nach einem der vorhergehenden Ansprüche, **dadurch gekennzeichnet, daß** die Träger als Metallprofile, vorzugsweise Hohlprofile (18, 38, 58, 88), ausgebildet sind.

13. Kabelkanal nach einem vorhergehenden Ansprüche, **dadurch gekennzeichnet, daß** die Träger außen mit Kunststoff beschichtet sind.

14. Kabelkanal nach einem der vorhergehenden Ansprüche, **dadurch gekennzeichnet, daß** die Träger die Stützen miteinander zu verbinden vermögen.

15. Kabelkanal nach einem der vorhergehenden Ansprüche, **dadurch gekennzeichnet, daß** die Träger mittels Formstücken aus Kunststoff mit den Stützen verbindbar sind.

16. Kabelkanal nach Anspruch 15, **dadurch gekennzeichnet, daß** die Formstücke die Träger an ihrer Unterseite wenigstens teilweise zu umgreifen vermögen.

17. Kabelkanal nach Anspruch 1, **gekennzeichnet durch** Deckel (17, 170) mit geschlossener Oberfläche und an der Unterseite hervorragend angeordneten, versteifenden Rippen und Deckelrändern, mit denen er auf den Rändern der Wanne auflegbar und mindestens einseitig mit der Wanne nach Art eines Scharniers verhakbar ist, wobei das Scharnier aus mehreren mit dem Deckel (17, 170) verbundenen Bolzenteilen (176) besteht, die jeweils um einige Millimeter länger sind als komplementäre Bolzenhalterungen (155) an der Wanne (100), der Deckel geringfügig länger als die zugehörige Wanne ist, wobei an beiden Enden (173) des Deckels versteifende Rippen (173 o, 173 u) in Bezug auf die Deckelmitte auf weniger als die Hälfte ihrer Höhe reduziert sind und die Deckeldicke an einem Ende von der Unterseite und am anderen Ende von der Oberfläche her reduziert ist.

18. Kabelkanal nach Anspruch 17, **dadurch gekennzeichnet, daß** von einer versteifenden Rippe aus ein Haken (179) nach unten vorspringt, der in eine Aussparung (154) des der Auflage des Deckels (17, 170) dienenden Wannenrandes eingreifend gestaltet ist.

19. Kabelkanal nach Anspruch 17 oder 18, **dadurch gekennzeichnet, daß** die versteifenden Rippen am Deckelrand so gestaltet sind, daß sie einem Höcker (165) auf dem Wannnenrand (16) als Anschlag dienen können.

## Claims

1. Cable duct, comprising troughs (11, 31, 41, 51, 61, 71, 82, 91, 100), which are disposable in rows adjacent one another and are closable by covers (17, 170), said troughs being formed from plastics material and being suitable for mounting on carriers, which extend in the longitudinal direction of the cable duct and are connectable to a supporting structure, **characterised in that** the troughs (11, 31, 41, 51, 61, 71, 82, 91, 100) have, on their outside, sockets which can be placed over the carriers (18, 38, 48, 58, 68, 78, 88, 98) extending in the longitudinal direction of the cable duct.

2. Cable duct according to claim 1, **characterised in that** the sockets are so deep that, when the trough is mounted, the carrier lies within the covering ends of the trough.

3. Cable duct according to claim 1 or 2, **characterised in that** each trough (7, 8, 9) has at least one socket (72, 855) centrally in the base or beneath the base (82, 91) in a transverse rib (75, 85, 95).

4. Cable duct according to one of the preceding claims, **characterised in that** the carriers are mountable on vertical supports.

5. Cable duct according to one of the preceding claims, **characterised in that** it comprises means for covering the carriers at least partially.

6. Cable duct according to claim 5, **characterised in that** the means include aprons which are moulded integrally on the trough or are separately attachable to the trough, the carriers or the supports.

7. Cable duct according to one of the preceding claims, **characterised in that** the trough is retainable with parts thereof on the carrier in the manner of a clamp- or snap-fit closure.

8. Cable duct according to one of the preceding claims, **characterised in that** the troughs, which are disposable in rows adjacent one another and have an internal wall with a U-shaped cross-section, each have projection members (121) which, after being disposed in rows adjacent one another, form an overlapped part of the internal wall of the adjacent trough which has a recess (122) there.

9. Cable duct according to one of the preceding claims, **characterised in that** the troughs are connectable to the carrier by means of screws, the screws preferably extending through a trough wall from above.

10. Cable duct according to claim 9, **characterised in that** the screws are self-tapping for metal.

11. Cable duct according to one of the preceding claims, **characterised in that** each trough is mountable on two carriers parallel to each other.

12. Cable duct according to one of the preceding claims, **characterised in that** the carriers are in the form of metal profiles, preferably hollow profiles (18, 38, 58, 88).

13. Cable duct according to one of the preceding claims, **characterised in that** the carriers are coated externally with plastics material.

14. Cable duct according to one of the preceding claims, **characterised in that** the carriers can join the supports together.

15. Cable duct according to one of the preceding claims, **characterised in that** the carriers are connectable to the supports by means of moulded pieces of plastics material.

16. Cable duct according to claim 15, **characterised in that** the moulded pieces can surround the carriers at least partially at their underside.

17. Cable duct according to claim 1, **characterised by** covers (17, 170) with a continuous surface and reinforcing ribs, which are disposed so as to protrude at the underside, and cover edges, by means of which it can be placed on the edges of the trough and can be hooked at least on one side to the trough in the manner of a hinge, the hinge comprising a plurality of pin parts (176), which are connected to the cover (17, 170) and are each a few millimetres longer than complementary pin holders (155) on the trough (100), the cover being slightly longer than the associated trough, reinforcing ribs (173 o, 173 u) being reduced, at both ends (173) of the cover, to less than half their height relative to the centre of the cover, and the cover thickness being reduced from the underside at one end and from the surface at the other end.

18. Cable duct according to claim 17, **characterised in that** a hook (179) protrudes downwardly from a reinforcing rib, which hook is shaped to engage in a recess (154) in the trough edge, which serves to support the cover (17, 170).

19. Cable duct according to claim 17 or 18, **characterised in that** the reinforcing ribs are so shaped, at the cover edge, that they may serve as a stop member for a protuberance (165) on the trough edge (16).

## Revendications

1. Caniveau de câbles constitué de cuves (11, 31, 41, 51, 61, 71, 82, 91, 100) en matière plastique pouvant être fermées par un couvercle (17, 170) pouvant être montées en série entre elles, lesquelles conviennent pour le montage sur un support qui s'étend dans le sens longitudinal du caniveau de câbles, pouvant être relié à un élément d'appui, **caractérisé en ce que** les cuves (11, 31, 41, 51, 61, 71, 82, 91, 100) présentent du côté extérieur des épaulements qui peuvent être emboutis sur le support (18, 38, 48, 58, 68, 78, 88, 98) qui s'étend dans le sens longitudinal du caniveau de câbles.

2. Caniveau de câbles selon la revendication 1, **caractérisé en ce que** les épaulements possèdent une telle profondeur que le support se trouve à l'intérieur de l'enveloppe de la cuve lorsque la cuve est montée.

3. Caniveau de câbles selon l'une des revendications 1 ou 2, **caractérisé en ce que** chaque cuve (7, 8, 9) comprend au moins un épaulement (72, 855) au centre dans le fond ou sous le fond (82, 91) dans une nervure transversale (75, 85, 95).

4. Caniveau de câbles selon l'une des revendications précédentes, **caractérisé en ce que** les supports peuvent être montés sur des appuis verticaux.

5. Caniveau de câbles selon l'une des revendications précédentes, **caractérisé en ce qu'**il comprend des moyens pour recouvrir au moins partiellement les supports.

6. Caniveau de câbles selon la revendication 5, **caractérisé en ce que** les moyens comprennent des tabliers formés d'une pièce sur la cuve ou pouvant être installés séparément sur la cuve, les supports ou les appuis.

7. Caniveau de câbles selon l'une des revendications précédentes, **caractérisé en ce que** la cuve peut être maintenue avec des parties de celle-ci sur le support selon le procédé d'une fermeture à serrage ou à déclic.

8. Caniveau de câbles selon l'une des revendications précédentes, **caractérisé en ce que** les cuves pouvant être montées en série entre elles comprennent chacune des épaulements (121) avec une paroi intérieure ayant une section en forme de U, qui forment après le montage en série une partie en chevauchement de la paroi intérieure de la cuve adjacente qui comprend à cet endroit un évidement (122).

9. Caniveau de câbles selon l'une des revendications précédentes, **caractérisé en ce que** les cuves peuvent être fixées au support au moyen de vis, les vis traversant de préférence un bord de la cuve depuis le haut.

10. Caniveau de câbles selon la revendication 9, **caractérisé en ce que** les vis sont réalisées comme vis autotaraudeuses pour le métal.

11. Caniveau de câbles selon l'une des revendications précédentes, **caractérisé en ce que** chaque cuve peut être montée sur deux supports parallèles entre eux.

12. Caniveau de câbles selon l'une des revendications précédentes, **caractérisé en ce que** les supports sont réalisés comme profilés métalliques, et de préférence comme profilés creux (18, 38, 58, 88).

13. Caniveau de câbles selon l'une des revendications précédentes, **caractérisé en ce que** les supports sont revêtus à l'extérieur de matière plastique.

14. Caniveau de câbles selon l'une des revendications précédentes, **caractérisé en ce que** les supports permettent de relier les appuis entre eux.

15. Caniveau de câbles selon l'une des revendications précédentes, **caractérisé en ce que** les supports peuvent être reliés avec les appuis au moyen de pièces formées en matière plastique.

16. Caniveau de câbles selon la revendication 15, **caractérisé en ce que** les pièces formes permettent de saisir les supports sur leur côté inférieur au moins en partie.

17. Caniveau de câbles selon la revendication 1, **caractérisé par** un couvercle (17, 170) avec une surface fermée et des nervures et des bords de couvercle qui le rigidifie agencés en saillie sur le côté inférieur, avec lesquels il peut être déposé sur les bords de la cuve et il peut être verrouillé au moins d'un côté avec la cuve selon le procédé d'une charnière, la charnière étant constituée de plusieurs pièces de boulons (176) reliées avec le couvercle (17, 170) qui sont à chaque fois quelques millimètres plus longues que les supports de boulons complémentaires (155) sur la cuve (100), le couvercle étant légèrement plus long que la cuve correspondante, dans lequel aux deux extrémités (173) du couvercle, des nervures qui le rigidifient (173o, 173u) sont réduites de moins de la moitié de leur hauteur par rapport au centre du couvercle et l'épaisseur du couvercle est réduite à une extrémité depuis le côté inférieur et à l'autre extrémité depuis la surface.

18. Caniveau de câbles selon la revendication 17, **caractérisé en ce qu'**un crochet (179) dépasse en saillie vers le bas d'une nervure de rigidification, lequel est réalisé pour s'insérer dans un évidement (154) du bord de la cuve servant à déposer le couvercle (17, 170).

19. Caniveau de câbles selon l'une des revendications 17 ou 18, **caractérisé en ce que** les nervures de rigidification sur le bord du couvercle sont réalisées de telle sorte qu'elles peuvent servir de butée à une bosse (165) sur le bord de la cuve (16).
